(19) Europäisches Patentamt
European Patent Office
Office européen des brevets

(11) **EP 1 854 820 B1**

(12) **EUROPEAN PATENT SPECIFICATION**

(45) Date of publication and mention
of the grant of the patent:
**11.06.2014 Bulletin 2014/24**

(21) Application number: **06714221.6**

(22) Date of filing: **21.02.2006**

(51) Int Cl.:
***C08G 63/80*** *(2006.01)*      ***C08G 63/85*** *(2006.01)*
***C08G 63/82*** *(2006.01)*

(86) International application number:
**PCT/JP2006/303081**

(87) International publication number:
**WO 2006/090708 (31.08.2006 Gazette 2006/35)**

(54) **PROCESS FOR CONTINUOUS PRODUCTION OF POLYESTER, POLYESTER PREPOLYMER GRANULE AND POLYESTER**

VERFAHREN ZUR KONTINUIERLICHEN HERSTELLUNG VON POLYESTER, POLYESTERPREPOLYMERGRANULAT UND POLYESTER

PROCÉDÉ DE FABRICATION CONTINUE DE POLYESTER, GRANULÉ DE PRÉPOLYMÈRE POLYESTER ET POLYESTER

(84) Designated Contracting States:
**DE**

(30) Priority: **25.02.2005 JP 2005051460**

(43) Date of publication of application:
**14.11.2007 Bulletin 2007/46**

(73) Proprietor: **Bühler Thermal Processes AG**
**9245 Oberbüren (CH)**

(72) Inventors:
• **ONO, Shinji**
 **Yokkaichi-shi, Mie, 5108530 (JP)**
• **KIMURA, Hisashi**
 **Yokkaichi-shi, Mie, 5108530 (JP)**
• **HIGASHIJIMA, Michio**
 **Yokkaichi-shi, Mie, 5108530 (JP)**

(74) Representative: **Hepp, Dieter**
**Hepp Wenger Ryffel AG**
**Friedtalweg 5**
**9500 Wil (CH)**

(56) References cited:
**EP-A1- 1 541 613      JP-A- 2001 172 373**
**JP-A- 2004 224 932     US-A- 6 160 085**

• **DATABASE WPI Week 200471 Thomson Scientific, London, GB; AN 2004-722134 XP002569972 -& JP 2004 285350 A (TOYOBO KK) 14 October 2004 (2004-10-14)**
• **DATABASE WPI Week 200446 Thomson Scientific, London, GB; AN 2004-483032 XP002569973 -& JP 2004 143442 A (MITSUBISHI CHEM CORP) 20 May 2004 (2004-05-20)**

## Description

Technical Field

The present invention relates to a continuous production process of polyester, to a polyester prepolymer granule having a relatively low molecular weight, which is a production intermediate of the subject process and is suitable for solid phase polycondensation, and to a polyester obtainable by solid phase polycondensation thereof. In particular, the invention relates to a continuous production process capable of producing a polyester at a high rate while simplifying a melt polycondensation reaction device.

Background Art

Since polyesters represented by polyethylene terephthalate are excellent in mechanical properties, thermal properties, electrical properties, and the like, they are widely used for fibers, films, sheets and molded articles such as bottles of various utilities, and their demand is expanding.

High-molecular weight polyesters which are used as a container material such as bottles are usually produced by subjecting a dicarboxylic acid and/or an ester forming derivative thereof and a diol to melt polycondensation and solid phase polycondensation via esterification and/or an ester exchange reaction.

In a production process which is currently the mainstream, polyesters are produced by obtaining a polyester prepolymer having a relatively high molecular weight by melt poly-condensation and subjecting it to solid polycondensation. For the purpose of obtaining a polyester prepolymer having a relatively high molecular weight, a horizontal reactor having plug flow properties and provided with a complicated stirring blade is used in a final stage of the melt polycondensation. Also, in general, it takes a long period of time of ten-odd hours or more for the solid phase polycondensation reaction. In contrast, as a process for efficiently producing a polyester without using a device of a complicated structure as a melt polycondensation reactor, for example, there is proposed a production process of polyester by obtaining a polyester prepolymer having a relatively low molecular weight by melt polycondensation and providing it for a solid phase poly-condensation step (see, for example, Patent Document 1). However, even this case is still insufficient because of the matter that a relatively long period of time for the solid phase polycondensation is required.

Also, Patent Document 2 describes that a solid phase polycondensation rate depends upon the amount of catalyst and the content of a carboxyl terminal group of prepolymer; and that the content of a carboxyl terminal group of prepolymer is adjusted by changing a charge ratio of terephthalic acid and ethylene glycol in an esterification reaction, adding an excessive amount of ethylene glycol against the initial charge amount in a later stage of the reaction, or after partial evacuation in a polycondensation step, adding a catalyst. However, this process was difficult for application to a continuous production process of polyester and was not always satisfactory in view of the polymerization rate.

On the other hand, as a catalyst for advancing a polycondensation reaction, antimony compounds, germanium compounds, titanium compounds, and so on have been known from old. Also, as a catalyst having a high polycondensation reaction rate, tungsten compounds such as tungsten salts are known (see, for example, Patent Document 3). However, even a case of using a tungsten compound as a catalyst was still insufficient in view of the polymerization rate from a viewpoint of more efficient production.

Now, the polycondensation reaction proceeds mainly due to two kinds of reactions including an esterification reaction of a carboxylic acid and an alcohol and an ester exchange reaction of an ester bond and an alcohol (alcohol exchange reaction). However, the relationship between catalytic activity of the esterification reaction and catalytic activity of the ester exchange reaction has not been noticed so far, and technologies for improving the solid phase polycondensation rate by adjusting the foregoing catalytic activities have not been known.

     Patent Document 1: JP-T-10-512608
     Patent Document 2: JP-A-55-133421
     Patent Document 3: JP-B-44-19554

Disclosure of the Invention

Problems that the Invention is to Solve

The invention is aimed to provide a process for producing a polyester with high molecular weight and high quality and having practicality as a container material, etc., which is able to achieve the production for a relatively short period of time of solid phase polycondensation without using a complicated melt polycondensation reaction device and consequently at a low cost and with good efficiency.

Also, the invention is aimed to provide a polyester prepolymer having a relatively low molecular weight, which is suitable for the foregoing solid phase polycondensation. Means for Solving the Problems

In view of the foregoing problems, the present inventors made extensive and intensive investigations. As a result, it has been found that in producing a polyester prepolymer having a relatively low molecular weight by melt polycondensation and subjecting the subject prepolymer to solid phase poly-condensation to produce a polyester having a high molecular weight, a solid phase polycondensation rate is improved by adding two or more catalysts having a specific relation within a specific range of a catalytic activity ratio in a specific order in a specific stage of the production step of polyester, leading to accomplishment of the invention.

Specifically, a gist of the invention resides in a continuous production process for continuously producing a polyester including (a) an esterification step for obtaining an oligomer by an esterification reaction of a dicarboxylic acid component containing terephthalic acid as the major component and a diol component containing ethylene glycol as the major component, (b) a melt polycondensation step for obtaining a polyester prepolymer by a melt polycondensation reaction of the obtained oligomer, (c) a granulation step for obtaining a polyester prepolymer granule by granulation of the obtained polyester prepolymer, and (d) a solid phase polycondensation step for obtaining a polyester by a solid phase polycondensation reaction of the obtained polyester prepolymer granule, which is characterized in that at least two kinds of a catalyst 1 and a catalyst 2 which satisfy the following requirements (1) to (3) are successively added as catalysts in two arbitrary different places prior to the granulation step (c); that an intrinsic viscosity of the polyester Prepolymer obtained in the step (b) is 0.18 dL/g or more and not more than 0.33 dL/g; that an intrinsic viscosity of the polyester prepolymer granule obtained in the step (c) is 0.18 dL/g or more and not more than 0.35 dL/g; and that an intrinsic viscosity of the polyester obtained in the solid phase polycondensation step (d) is 0.70 dL/g or more:

(1) an activity ratio (K1) of the catalyst 1 is 0.5 or more,
(2) an activity ratio (K2) of the catalyst 2 is less than 0.6, and
(3) K1 > K2
(the "catalytic activity ratio" as referred to herein is an index of a ratio of esterification reaction catalytic activity to the total sum of esterification reaction catalytic activity and ester exchange reaction catalytic activity of the catalyst and is defined according to a method described in the description.)

Advantages of the Invention

According to the process of the invention, it is possible to produce a polyester with high molecular weight and high quality and having practicality as a container material such as bottles and the like for a short period of time of solid phase polycondensation without using a complicated melt poly-condensation reaction device, and as a result, it becomes possible to produce a polyester at a low cost and with good efficiency.

Best Modes for Carrying Out the Invention

The following explanation of constituent features is concerned with examples (representative examples) of the embodiments of the invention, and it should not be construed that the invention is not limited to these contents.

The continuous production process of polyester of the invention is premised on the matter including (a) an esterification step for obtaining an oligomer by an esterification reaction of a dicarboxylic acid component containing terephthalic acid as the major component and a diol component containing ethylene glycol as the major component, (b) a melt polycondensation step for obtaining a polyester prepolymer by a melt polycondensation reaction of the obtained oligomer, (c) a granulation step for obtaining a polyester prepolymer granule by granulation of the obtained polyester prepolymer, and (d) a solid phase polycondensation step for obtaining a polyester by solid phase polycondensation reaction of the obtained polyester prepolymer granule. In general, the continuous production process of polyester of the invention includes a slurry forming step for obtaining slurry by mixing a dicarboxylic acid component and a diol component prior to the foregoing step (a). Furthermore, the continuous production process of polyester of the invention includes a slurry transfer step for transferring the slurry into the esterification step between the slurry forming step and the step (a); an oligomer transfer step for transferring the oligomer obtained in the step (b) into the melt polycondensation step between the steps (a) and (b); and a prepolymer transfer step for transferring the obtained polyester prepolymer into the granulation step between the steps (c) and (d).

Incidentally, each of the foregoing transfer steps is carried out by connecting the respective precedent and post steps by piping and continuously transferring the mixture and/or product (hereinafter referred to as "product" collectively) in the precedent step into the post step. Examples of a continuous transfer method include a method in which the precedent step, the transfer step and the post step are successively set up downward and the product of the precedent step is transferred by utilizing a difference of altitude; a method in which a pressure of the precedent step is set up relatively high as compared with that of the post step and the product is transferred in the transfer step by utilizing a difference in pressure between the precedent and post steps; and a method in which a pump is set up in the post step and the product in the precedent step is transferred. Above all, the method of transfer using a pump is preferable because it is possible to control the amount or rate of transfer of the product in the precedent step with good precision. Furthermore, in order to remove insoluble impurities or deposits having a large particle size, a filter or the like can also be set up in the transfer step.

The "dicarboxylic acid component containing terephthalic acid as the major component" as referred to in the invention means a dicarboxylic acid component in which a terephthalic acid component accounts for 95 % by mole or more, and preferably 97 % by mole or more of the whole dicarboxylic acid component to be used in producing a polyester. When the content of the terephthalic acid component is less than the foregoing range, in forming the resulting polyester into a molded article, heat resistance as a molded article such as heat resistant bottles is liable to be deteriorated. Furthermore, the "diol component containing ethylene glycol as the major component" as referred to herein means that an ethylene glycol component accounts for 95 % or more, and preferably 97 % by mole or more of the whole diol component to be used in producing a polyester.

Here, examples of the dicarboxylic acid component other than terephthalic acid include aromatic dicarboxylic acids such as phthalic acid, isophthalic acid, dibromoisophthalic acid, sodium sulfoisophthalate, phenylenedioxydicarboxylic acid, 4,4'-diphenyldicarboxylic acid, 4,4'-diphenyl ether dicarboxylic acid, 4,4'-diphenyl ketone dicarboxylic acid, 4,4'-diphenoxyethanedicarboxylic acid, 4,4'-diphenylsul-fonedicarboxylic acid, and 2,6-naphthalenedicarboxylic acid; alicyclic dicarboxylic acids such as hexahydroterephthalic acid and hexahydroisophthalic acid; and aliphatic dicarboxylic acids such as succinic acid, glutaric acid, adipic acid, pimelic acid, suberic acid, azelaic acid, sebacic acid, undecadicarboxylic acid, and dodecadicarboxylic acid.

Furthermore, examples of the diol component other than ethylene glycol include aliphatic diols such as trimethylene glycol, tetramethylene glycol, pentamethylene glycol, hexamethylene glycol, octamethylene glycol, decamethylene glycol, neopentyl glycol, 2-ethyl-2-butyl-1,3-propanediol, polyethylene glycol, and polytetramethylene ether glycol; alicyclic diols such as 1,2-cyclohexanediol, 1,4-cyclohexanediol, 1,1-cyclohexanedimethylol, 1,4-cyclohexanedimethylol, and 2,5-norbornanedimethylol; aromatic diols such as xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl) sulfone, and bis(4-β-hydroxyethoxyphenyl)sulfonic acid; and an ethylene oxide adduct or propylene oxide adduct of 2,2-bis(4'-hydroxyphenyl)propane.

Furthermore, a trifunctional or polyfunctional compound, for example, polycarboxylic acids such as trimellitic acid and pyromellitic acid and anhydrides thereof; polyols such as trimethylolmethane, trimethylolethane, trimethylolpropane, pentaerythritol, glycerol, and hexanetriol; and hydroxycarboxylic acids such as malic acid and citric acid may be used as a copolymerization component, if desired for the purposes of adjusting physical properties of the resulting polyester and the like.

In the production process of the invention, it is necessary that at least two kinds of a catalyst 1 and a catalyst 2 which satisfy the following (1) to (3) are successively added as catalysts in two arbitrary different places prior to the granulation step (c):

(1) an activity ratio (K1) of the catalyst 1 is 0.5 or more,
(2) an activity ratio (K2) of the catalyst 2 is less than 0.6, and
(3)

$$K1 > K2$$

Here, the catalytic activity ratio is defined as follows. <Definition of activity ratio>

The "catalytic activity ratio (K) " as referred to herein is an index of a ratio of esterification reaction catalytic activity to the total sum of esterification reaction catalytic activity and ester exchange reaction catalytic activity and is computed according to the following expression.

$$K = 2 \times (AV0 - AV1)/(TEV0 - TEV1)$$

Here, AV0, TEV0, AV1 and TEV1 are respectively defined as follows.
(i) A starting oligomer of the desired polyester (concentration of the whole of terminal groups: 1,600 ± 160 equivalents/ton, concentration of terminal carboxyl group: 900 ± 100 equivalents/ton) is rendered in a molten state at a temperature of 270°C, a catalyst to be noticed is added, and the mixture is gradually evacuated while stirring, thereby subjecting it to a melt polycondensation reaction at 1.33 kPaA (10 torr) . Here, the "kPaA" expresses an absolute pressure in terms of a kPa unit. Incidentally, since it is actually difficult to adjust each of the concentration of the whole of terminal groups and the concentration of terminal carboxyl group of the starting oligomer as a single value and it is thought that a fluctuation of the catalytic activity ratio as defined in the invention, which is caused due to a slight fluctuation of the subject value, is negligible, the respective tolerable fluctuations were expressed in terms of "±" as described previously.

(ii) A point of time when the pressure reaches 1.33 kPaA is designated as "0 minute point", and samples at 0 minute point and 20 minutes point are collected.

(iii) With respect to the both samples at 0 minute point and 20 minutes point, the concentration of terminal carboxyl group and the concentration of the whole of terminal groups are measured and are designated as AV0, TEV0, AV1 and TEV1, respectively as described below.

AV0: Concentration of terminal carboxyl group of sample at 0 minute point
TEV0: Concentration of the whole of terminal groups of sample at 0 minute point
AV1 Concentration of terminal carboxyl group of sample at 20 minutes point
TEV1: Concentration of the whole of terminal groups of sample at 20 minutes point

The concentration of catalyst in the starting oligomer is adjusted for every kind of catalyst such that an intrinsic viscosity at 20 minutes point falls within the range of from 0.18 to 0.28 dL/g. Incidentally, since it is actually difficult to adjust the intrinsic viscosity as a single value and it is thought that a fluctuation of the catalytic activity ratio as defined in the invention, which is caused due to a slight fluctuation of the subject value, is negligible, the tolerable intrinsic viscosity was set up at from 0.18 to 0.28 dL/g as described previously.

Incidentally, the TEV (equivalents/ton) is computed according to the following expressions.

$$Mn = (\text{Intrinsic viscosity (dL/g)} \times 10000/7.55)^{(1/0.685)}$$

$$TEV \text{ (equivalents/ton)} = 2 \times 1000 \times 1000/Mn$$

Here, Mn represents a number average molecular weight. Furthermore, AV (equivalents/ton) is measured by titration.

<Position of addition>

In the invention, what at least two kinds of a catalyst 1 and a catalyst 2 are successively added in two arbitrary different places prior to the granulation step (c) means that so far as at least the catalyst 1 and the catalyst 2 are added in this order from different places of any step prior to the granulation step (c), namely the catalyst 1 is added in a step in the upstream side with respect to the place of addition of the catalyst 2, they may be added in different positions in the same step, for example, the plural esterification steps, or may be added in different steps. Above all, it is preferable that the catalyst 1 is added in the esterification step (a), whereas the catalyst 2 is added in a step for transferring the oligomer obtained in the esterification step (a) into the melt polycondensation step (b) or a step after that. By adding the catalyst 1 and the catalyst 2 in this order, it becomes easy to obtain a polyester prepolymer having a low concentration of the terminal carboxyl group, and as a result, the solid phase polycondensation rate is liable to become high.

The activity ratio K1 of the catalyst 1 is 0.5 or more. However, it is preferably 0.55 or more, more preferably 0.60 or more, particularly preferably 0.65 or more. On the other hand, though a higher value of K1 is preferable, its upper limit is 1.0. What the K1 is less than 0.5 is not preferable because the concentration of the terminal carboxyl group of the polyester prepolymer obtained after the melt polycondensation step becomes high and the solid phase polycondensation reaction rate becomes low.

The activity ratio K2 of the catalyst 2 is less than 0.6. However, it is preferably less than 0.55. Its lower limit is usually 0.2, and preferably 0.3. The activity ratio K2 of the catalyst 2 is related to ester exchange reaction activity which is effective for the solid phase polycondensation reaction. What K2 is 0. 6 or more is not preferable because the solid phase polycondensation reaction rate becomes low.

Furthermore, it is required that there is a relation of K1 > K2 between the activity ratio K1 of the catalyst 1 and the activity ratio K2 of the catalyst 2. A relation of K1 ≦ K2 is not preferable because a characteristic feature of the invention that the reaction rate in the solid phase poly-condensation step is high is not revealed.

The catalyst 1 is not particularly limited so far as it is selected from those having an activity ratio K1 of 0.5 or more and satisfied with K1 > K2. Examples thereof include tungsten compounds and titanium compounds. Of these, tungsten compounds are preferable.

Examples of tungsten compounds include p-tungstic acid, m-tungstic acid, tungstic acid, tungstosilicic acid, tungsto-phosphoric acid, and salts thereof. Examples of salts include ammonium salts and alkali metal salts such as sodium salts and potassium salts. Above all, ammonium m-tungstate, ammonium p-tungstate, sodium tungstate, and tungstic acid are preferable, with ammonium m-tungstate and ammonium p-tungstate being especially preferable.

Examples of titanium compounds include tetraalkoxy titanates such as tetra-n-propyl titanate, tetra-i-propyl titanate, tetra-n-butyl titanate, a tetra-n-butyl titanate tetramer, tetra-t-butyl titanate, and acetyl-tri-i-propyl titanate, titanium acetate, titanium oxalate, and titanium chloride. Of these, tetra-i-propyl titanate and tetra-n-butyl titanate are preferable, with tetra-n-butyl titanate being especially preferable.

The amount of use of the catalyst 1 varies depending upon the kind of catalyst and cannot be unequivocally defined. However, in general, it may be properly chosen such that the concentration of a metal element derived from the catalyst 1 in the resulting polyester is from 0.5 ppm by weight to 500 ppm by weight. The lower limit of the subject concentration is preferably 1 ppm by weight, and the upper limit is preferably 300 ppm by weight, more preferably 200 ppm by weight, and especially preferably 100 ppm by weight. Incidentally, in the case of using a combination of two or more kinds of compounds containing a different metal as the catalyst 1, the concentration of the foregoing metal element is defined as a concentration of the total sum of different metal elements.

The catalyst 2 is not particularly limited so far as it is selected from those having an activity ratio K2 of less than 0.6 and satisfied with K1 > K2 . However, for example, germanium compounds and antimony compounds are preferably used.

Examples of germanium compounds include germanium dioxide, germanium tetroxide, germanium hydroxide, germanium oxalate, germanium tetraethoxide, and germanium tetra-n-butoxide, with germanium dioxide being preferable. Examples of antimony compounds include diantimony trioxide, antimony pentoxide, antimony acetate, and methoxy antimony, with diantimony trioxide being preferable.

Each of the catalyst 1 and the catalyst 2 may be a single compound or a combination of two or more kinds of compounds. Also, a combination of at least one kind of the foregoing catalyst component and at least one kind of other cocatalyst component may be employed. In addition, the catalyst 2 may be used as a cocatalyst component. Examples of the cocatalyst include alkali metal compounds, alkaline earth metal compounds, and silicon compounds.

A combination of a titanium compound and at least one kind of a cocatalyst is also preferable as the catalyst 2. Above all, a catalyst containing a titanium element and a silicon element, a catalyst containing a titanium element and a magnesium element, and a catalyst containing three elements of a titanium element, a magnesium element and a phosphorus element are preferable. In this case, examples of the titanium compound include tetra-n-propyl titanate, tetra-i-propyl titanate, tetra-n-butyl titanate, a tetra-n-butyl titanate tetramer, tetra-t-butyl titanate, titanium acetate, titanium oxalate, potassium titanium oxalate, sodium titanium oxalate, potassium titanate, sodium titanate, titanium chloride, and a titanium chloride-aluminum chloride mixture. Above all, titanium alkoxides such as tetra-n-propyl titanate, tetra-i-propyl titanate, and tetra-n-butyl titanate are preferable. Examples of the cocatalyst component include silicic acid ester compounds such as tetramethoxysilane, tetraisopropoxysilane, tetrabutoxysilane, tetraphenoxysilane, and tetrabenzyloxysilane; carboxylic acid salts of silicon such as silicon acetate; siloxane compounds such as disiloxane, trisiloxane, dimethyldisiloxane, and hexamethyldisiloxane; silanol compounds such as silanol, silane diol, and phenylsilane triol; silanolate compounds such as sodium toluphenylsilanol; silicon compounds such as polyalkoxysiloxane compounds which are a hydrolyzate of a silicic acid ester compound; and magnesium compounds such as magnesium acetate.

A combination of an alkali metal compound and/or an alkaline earth metal compound and a phosphorus compound is also preferable as the catalyst 2. Above all, a catalyst containing a magnesium element and a phosphorus element is preferable. In this case, examples of the alkali metal compound and/or the alkaline earth metal compound include lithium acetate, sodium acetate, potassium acetate, potassium hydroxide, magnesium acetate, magnesium hydroxide, magnesium alkoxides, magnesium carbonate, calcium hydroxide, calcium acetate, and calcium carbonate. Furthermore, examples of the phosphorus compound include orthophosphoric acid, orthophosphoric acid alkyl esters, ethyl acid phosphate, monoethyl acid phosphate, diethyl acid phosphate, dibutyl phosphate, triethylene glycol acid phosphate, phosphorous acid, and phosphorous acid alkyl esters. Above all, a combination of magnesium acetate and ethyl acid phosphate and/or dibutyl phosphate is preferable.

The amount of use of the catalyst 2 varies depending upon the kind of catalyst and cannot be unequivocally defined. However, in general, it may be properly chosen such that the concentration of a metal element derived from the catalyst 2 in the resulting polyester is from 1 ppm by weight to 500 ppm by weight. The lower limit of the subject concentration is preferably 5 ppm by weight, and the upper limit is preferably 300 ppm by weight, and more preferably 250 ppm by weight. Incidentally, in the case of using a combination of two or more kinds of compounds containing a different metal as the catalyst 2, the concentration of the foregoing metal element is defined as a concentration of the total sum of different metal elements.

Incidentally, in the production process cf the invention, a phosphorus compound as a stabilizer or the like may be used so far as the catalysts 1 and 2 are used.

In the production process of polyester according to the invention, the intrinsic viscosity of the polyester prepolymer obtained in the melt polycondensation step (b) is regulated at 0.18 dL/g or more and not more than 0.33 dL/g. The lower limit is preferably 0.19 dL/g, and more preferably 0.20 dL/g; and the upper limit is preferably 0.32 dL/g. When this intrinsic viscosity is less than the lower limit, for example, there is a disadvantage that a time required for the reaction of the solid phase polycondensation step as a post step becomes long. On the other hand, when it exceeds the upper limit, for example, complicated and expensive equipment is required such that a horizontal reactor having plug flow properties must be used as the polycondensation reactor in the melt polycondensation step, and therefore, such is not suitable for the object of the invention of this application.

Furthermore, the concentration of the terminal carboxyl group of the polyester prepolymer is preferably not more than 30 equivalents/ton, and more preferably not more than 20 equivalents/ton. When the concentration of the terminal carboxyl group of the polyester prepolymer is too high, the solid phase polycondensation rate is liable to become slow. It is preferable that the lower limit is low as far as possible, and therefore, it is 0 equivalent/ton.

In the production process of polyester according to the invention, the polyester prepolymer granule which is provided in the solid phase polycondensation step usually has an average particle size of 0.1 mm or more and not more than 2.0 mm. The lower limit is preferably 0.15 mm, and more preferably 0.2 mm; and the upper limit is preferably 1.5 mm, and more preferably 1.3 mm. When the average particle size is too small, though the solid phase polycondensation rate is fast, handling properties in transfer, weighing, etc. become remarkably deteriorated because the polyester prepolymer is powder. On the other hand, when the average particle size is too large, there is some possibility that the specific surface area of the granule becomes small and that the solid phase polycondensation rate becomes low.

Incidentally, the thus obtained polyester prepolymer granule which is characterized by having an intrinsic viscosity of 0.18 dL/g or more and not more than 0 . 35 dL/g, a concentration of the terminal carboxyl group of not more than 30 equivalents/ton and an average particle size of 0.1 mm or more and not more than 2.0 mm and containing a tungsten element and at least one element selected from an antimony element, a germanium element and a titanium element as derived from the preferred catalysts 1 and 2 is novel and useful as an intermediate of the continuous production process of polyester according to the invention.

The intrinsic viscosity of the polyester obtained via the solid phase polycondensation step (d) according to the invention is 0 . 70 dL/g or more, and preferably 0.75 dL/g or more. Its upper limit is usually 1.10 dL/g, and preferably not more than 1.00 dL/g. What this intrinsic viscosity is less than the lower limit is not preferable because a mechanical strength of a molded article made of this as the starting material, such as bottles, is deteriorated. On the other hand, when it exceeds the upper limit, there is some possibility that a melt viscosity at the time of molding a molded article is too high so that molding failure is caused.

The continuous production process of polyester according to the invention is carried out according to a known production process of polyester, except that the selection of catalyst and the feed place of catalyst are regulated as described previously and that the intrinsic viscosity of the polyester prepolymer granule and the intrinsic viscosity of the polyester obtained in the solid phase polycondensation step are regulated as described previously by adjusting the reaction temperature, the reaction pressure, the reaction time, and so on.

Production conditions will be described below.

In the invention, in general, a dicarboxylic acid component and a diol component are mixed to prepare a starting slurry. The preparation of the starting slurry is carried out by adjusting a dicarboxylic acid component containing terephthalic acid as the major component and a diol component containing ethylene glycol as the major component and optionally a copolymerization component or the like in a molar ratio of the diol component to the dicarboxylic acid component of from 1.0 to 2.0. This molar ratio is preferably from 1.05 to 1.8, and more preferably from 1.1 to 1.6.

Subsequently, the prepared starting slurry is transferred into the esterification step provided with a single or plural esterification reaction tanks and subjected to an esterification reaction under a pressure of from an atmospheric pressure to an elevated pressure upon heating to form an oligomer which is a low molecular material of polyester (esterification step (a)).

With respect to the reaction condition in the esterification reaction, in the case of a single esterification reaction tank, the temperature is usually regulated at from about 240 to 290°C; the pressure is usually regulated at from about 0 to 400 kPaG (0 to 4 kg/cm$^2$G); and the reaction time (residence time) is regulated at from about 1 to 10 hours under stirring. Furthermore, in the case of plural esterification reaction tanks, in a first stage esterification reaction tank, the reaction temperature is usually regulated at from 240 to 270°C, and preferably from 245 to 265°C, and the pressure is usually regulated at from 5 to 300 kPaG (0.05 to 3 kg/cm$^2$G), and preferably from 10 to 200 kPaG (0.1 to 2 kg/cm$^2$G) ; and in a final stage, the reaction temperature is usually regulated at from 250 to 290°C, and preferably from 255 to 280°C, and the pressure is usually regulated at from 0 to 150 kPaG (0 to 1.5 kg/cm$^2$G), and preferably from 0 to 130 kPaG (0 to 1.3 kg/cm$^2$G). Here, the "kPaG" expresses a relative pressure to the atmospheric pressure in terms of a kPa unit.

In the invention, a rate of esterification of the oligomer as an esterification reaction product (a proportion of the carboxyl group which has been esterified upon reaction with the diol component in the whole of carboxyl groups in the starting dicarboxylic acid component) is preferably 90 % or more, and more preferably 94 % or more.

Subsequently, the obtained oligomer is transferred into the melt polycondensation step provided with a poly-condensation reaction tank and subjected to a melt polycondensation reaction under a reduced pressure upon heating (melt polycondensation step (b)). The melt polycondensation can be usually carried out in a single reaction tank of a complete mixing type as provided with a stirring blade.

In the invention, since the intrinsic viscosity of the polyester prepolymer obtained in the melt polycondensation is low as not more than 0.33 dL/g, second stage and third stage polycondensation reaction tanks of a horizontal plug flow type as provided with a stirring blade, which have been widely used so far, are not required. Thus, the melt poly-condensation step is simplified, and the equipment costs are reduced.

With respect to the reaction condition in the melt poly-condensation, the temperature is from 260 to 290°C, and preferably from 270 to 280°C; and the pressure is from 100 to 0.01 kPaA, and preferably from 50 to 0.1 kPaA. The reaction time (residence time) may be adjusted such that the intrinsic viscosity of the polyester prepolymer granule obtained by granulating the polyester prepolymer obtained in the melt polycondensation step in a granulation step as described below falls within the foregoing range of the invention. Though the reaction time varies depending upon the temperature and pressure, it is usually from about 0.5 to 3 hours.

The polyester prepolymer obtained by the foregoing melt polycondensation is usually extracted in a strand form from an extracting port provided in the bottom of the polycondensation reaction tank and cut by a cutter while cooling with water or after cooling with water, thereby forming it into a polyester prepolymer granule. Alternatively, the polyester prepolymer obtained by the foregoing melt polycondensation is discharged into water from an extracting port provided in the bottom of the polycondensation reaction tank and cut by a cutter having a rotary axis in a direction substantially parallel to the discharge direction and set up adjacent to the tip portion of the extracting port while cooling, thereby forming it into a polyester prepolymer granule. The polyester prepolymer obtained by the foregoing melt polycondensation can also be formed into a granule having a desired average particle size by pulverizing by a pulverizer.

If desired, the polyester prepolymer obtained in the granulation step (c) is subjected to crystallization and drying by a known method, for example, fluidization in an inert gas stream at from 120 to 180°C for from 0.5 to 12 hours, followed by a solid phase polycondensation reaction (solid phase polycondensation reaction step (d)).

That is, the solid phase polycondensation reaction in the process of the invention is carried out in an inert gas atmosphere wherein a lower limit of the temperature is usually 200°C, preferably 205°C, and more preferably 208°C and an upper limit of the temperature is a temperature of 5°C lower than the melting point of the subject polyester, preferably a temperature of 8°C lower than the melting point, and more preferably a temperature of 10°C lower than the melting point. The "melting point of polyester" as referred to herein means a temperature corresponding to an apex of an endothermic peak in the highest temperature side in a DSC curve upon raising the temperature from 0°C to 300°C at a rate of 20°C/min under a nitrogen gas stream by using a differential scanning calorimeter. Furthermore, the "inert gas" as referred to herein means a gas which has an oxygen concentration of not more than 0.1 % by volume, and preferably not more than 0.05 % by volume and does not substantially react with the polyester. Examples of the gas which does not substantially react with the polyester include nitrogen, helium, neon, argon, xenon, and carbon dioxide. Of these, nitrogen is preferably used mainly in view of economy.

What the solid phase polycondensation temperature is too low is not preferable because the solid phase polycondensation rate becomes low. What the solid phase polycondensation temperature is too high is not preferable because the polyester particle causes fusion at the time of solid phase polycondensation. Furthermore, in the case where the average particle size of the polyester prepolymer particle is not more than 1.0 mm, it is preferable that the solid phase poly-condensation is carried out in a fluidized bed. The solid phase polycondensation time may be set up depending upon the target intrinsic viscosity such that the intrinsic viscosity of the resulting polyester is 0.70 dL/g or more and is usually from about 1 to 50 hours. In general, the average particle size after the solid phase polycondensation substantially coincides with the average particle size of the prepolymer before the solid phase polycondensation.

The polyester obtained by the production process according to the invention can be formed into a bottle to be used for drink or the like by stretch blow molding after molding a preform by injection molding or extrusion molding. Furthermore, it can be formed into a bottle by direct blow molding.

Furthermore, the polyester obtained by the production process of the invention can be provided for various utilities such as packaging materials by forming a film or sheet by extrusion molding or stretch molding. Moreover, it can be formed into a fiber by extrusion and stretch molding.

The invention will be hereunder described in detail with reference to the following Examples, but it should not be construed that the invention is limited thereto so far as it does not fall outside the gists of the invention.

Incidentally, various measurement methods in the Examples and the measurement of catalytic activity ratio, a preparation method of a starting oligomer for the measurement of catalytic activity ratio and a preparation method of a catalyst as used in the Examples will be summarized and shown below.

<Intrinsic viscosity IV (dL/g)>

About 0.25 g of a sample was dissolved in about 25 mL of a mixed solvent of phenol/1,1,2,2-tetrachloroethane (weight ratio: 1/1) such that the concentration was 1.00 g/dL; the solution was cooled to 30°C and held; and seconds required for falling of a sample solution having a concentration of 1.00 g/dL and the solvent only were measured by a fully automatic solution viscometer (2CH Model DJ504, manufactured by Sentec Co., Ltd.); and the intrinsic viscosity IV was then computed according to the following expression.

$$IV = ((1 + 4KH\eta sp)^{0.5} - 1)/(2KHC)$$

Here, $\eta sp = \eta/\eta 0 - 1$; $\eta$ represents seconds required for falling of the sample solution; $\eta 0$ represents seconds required for falling of the solvent only; C represents a concentration of the sample solution (g/dL); and KH represents a Huggins constant. 0.33 was employed as KH.
With respect to the dissolution condition of the sample, in the case where the sample is a prepolymer, the dissolution was carried out at 120°C for 30 minutes; and in the case where the sample is a polyester after solid phase polycondensation, the dissolution was carried out at 140°C for 30 minutes.

<Rate of esterification reaction (%)>

A sample is pulverized in a mortar; a 1.0 g portion thereof is accurately weighed in a beaker, to which is then added 40 mL of dimethyl formamide; the mixture is heated for dissolution at 180°C for 20 minutes while stirring; and the beaker wall is then washed with 10 mL of dimethyl formamide at 180°C, followed by cooling to room temperature. This solution was titrated with a solution of 0.1 N potassium hydroxide in methanol by using a composite pH electrode "EA-120" by an automatic titrator, Metrohm's POTENTIOGRAPH "E-536 Model". Incidentally, the solution of 0.1 N potassium hydroxide in methanol was prepared and standardized according a method as defined in JIS K80006. The amount of a free terminal carboxyl group [AV (equivalents/ton)] was determined from a titration amount [A (mL)] determined from a point of inflection of the obtained titration curve, a factor [f1] of the solution of 0.1 N potassium hydroxide in methanol as prepared, standardized and computed according to the foregoing method, and a weight of the sample [W (g)] according to the following expression.

$$AV \text{ (equivalents/ton)} = \{A \times f1 \times (1/10)\}/W$$

Next, 0.3 g of a sample as pulverized in the mortar was accurately weighed in an Erlenmeyer flask, to which was then added 20 mL of a solution of 0.5 N KOH in ethanol by using a whole pipette; after further adding 10 mL of pure water, a reflux condenser was set; and the sample was subjected to hydrolysis by refluxing upon heating on a plate heater whose surface temperature was regulated at 200°C for 2 hours while occasionally stirring. At this time, the sample liquid becomes transparent. After allowing it to stand for cooling, the sample liquid was titrated with a 0.5 N hydrochloric acid aqueous solution by using phenolphthalein as an indicator. Incidentally, each of the solution of 0.5 N KOH in ethanol and the 0.5 N hydrochloric acid aqueous solution was prepared and standardized according to a method as defined in JIS K8006. Also, one prepared by dissolving 1 g of phenolphthalein in 90 mL of ethanol and adding pure water to make the volume constant to 100 mL was used as the phenolphthalein. Furthermore, the titration was carried out in a blank state that no sample was added under the same conditions. On that occasion, the amount of a carboxyl group derived from the whole of carboxylic acids [SV (equivalents/ton)] was determined from a titration amount of the sample [Vs (mL)], a titration amount of the blank [Vb (mL)], a factor [f2] of the 0.5 N hydrochloric acid aqueous solution as prepared, standardized and computed according to the foregoing method, and a weight of the sample [W (g)] according to the following expression.

$$SV \text{ (equivalents/ton)} = \{(Vb - Vs) \times f2 \times (1/2)\}/W$$

Next, the rate of esterification (%) was determined from the obtained AV (equivalents/ton) and SV (equivalents/ton) according to the following expression.

$$\text{Rate of esterification (\%)} = \{(SV - AV)/SV\} \times 100$$

<Concentration of terminal carboxyl group of polyester (equivalents/ton)>

A sample was pulverized and then dried at 140°C for 15 minutes by a hot air dryer; after cooling to room temperature in a desiccator, 0.1 g of the sample was accurately weighed and collected in a test tube, to which was then added 3 mL of benzyl alcohol; the mixture was dissolved at 195°C for 3 minutes while blowing a dry nitrogen gas thereinto; and next, 5 mL of chloroform was gradually added, followed by cooling to room temperature. One or two drops of a Phenol Red indicator were added to this solution; the mixture was titrated with a solution of 0.1 N sodium hydroxide in benzyl alcohol under stirring while blowing a dry nitrogen gas thereinto; and the titration was ended at a point of time when the color was changed from yellow to red. Also, a polyester resin-free sample was used as a blank and subjected to the same operations, and an acid value was computed according to the following expression.

$$\text{Concentration of terminal carboxyl group (equivalents/ton)} = (A - B) \times 0.1 \times f/W$$

[Here, A represents an amount ($\mu$L) of the solution of 0.1 N sodium hydroxide in benzyl alcohol required for the titration; B represents an amount ($\mu$L) of the solution of 0.1 N sodium hydroxide in benzyl alcohol required for the titration in the blank; W represents an amount (g) of the polyester resin sample; and $\underline{f}$ represents a titer of the solution of 0.1 N sodium hydroxide in benzyl alcohol.]

Incidentally, with respect to the titer (f) of the solution of 0.1 N sodium hydroxide in benzyl alcohol, 5 mL of methanol was collected in a test tube; one or two drops of a solution of Phenol Red in ethanol were added as an indicator; titration with 0.4 mL of a solution of 0.1 N sodium hydroxide in benzyl alcohol was carried out until a point of color change; next, 0.2 mL of a 0.1 N hydrochloric acid aqueous solution having a known titer was collected and added as a standard solution; and titration with a solution of 0.1 N sodium hydroxide in benzyl alcohol was again carried out until a point of color change. (These operations were carried out under blowing a dry nitrogen gas.) The titer (f) was then computed according to the following expression.

$$\text{Titer (f)} = [\text{Titer of 0.1 N hydrochloric acid aqueous solution}] \times [\text{Collected amount}$$
$$(\mu L) \text{ of 0.1 N hydrochloric acid aqueous solution}]/[\text{Titration amount } (\mu L) \text{ of}$$
$$\text{solution of 0.1 N sodium hydroxide in benzyl alcohol}]$$

<Average particle size of polyester granule>

A value when a cumulative percentage in a cumulative distribution curve prepared by a dry sieving method as described in JIS K0069 is 50 % was defined as an average particle size.

<Measurement of catalytic activity ratio>

The "catalytic activity ratio (K) " is an index of a ratio of esterification reaction catalytic activity to the total sum of esterification reaction catalytic activity and ester exchange reaction catalytic activity and is defined according to the following expression.

$$K = 2 \times (AV0 - AV1)/(TEV0 - TEV1)$$

Here, AV0, TEV0, AV1 and TEV1 are respectively defined as follows.
(i) A starting oligomer of the desired polyester (according to the following preparation method of the starting oligomer, concentration of the whole of terminal groups: 1, 600 ± 160 equivalents/ton, concentration of terminal carboxyl group: 900 ± 100 equivalents/ton) is subjected to temperature elevation from room temperature to a temperature of 270°C over 90 minutes while stirring and held at 270°C for 30 minutes, thereby rendering it in a molten state, a catalyst to be noticed is added, and the mixture is gradually evacuated from the atmospheric pressure to 1.33 kPaA (10 torr) over 10 minutes while stirring, thereby subjecting it to a melt poly-condensation reaction.

(ii) A point of time when the pressure reaches 1.33 kPaA is designated as "0 minute point", and samples at 0 minute point and 20 minutes point are collected.

(iii) With respect to the both samples at 0 minute point and 20 minutes point, the concentration of the terminal carboxyl group and the concentration of the whole of terminal groups are measured and designated as AV0, TEV0, AV1 and TEV1, respectively as described below.

AV0: Concentration of terminal carboxyl group of sample at 0 minute point
TEV0 Concentration of the whole of terminal groups of sample at 0 minute point
AV1 Concentration of terminal carboxyl group of sample at 20 minutes point
TEV1: Concentration of the whole of terminal groups of sample at 20 minutes point

The concentration of catalyst in the starting oligomer is adjusted for every kind of catalyst such that an intrinsic viscosity at 20 minutes point falls within the range of from 0.18 to 0.28 dL/g.
Incidentally, the TEV (equivalents/ton) is computed according to the following expressions.

$$\mathrm{Mn} = (\mathrm{Intrinsic\ viscosity\ (dL/g)} \times 10000/7.55)^{(1/0.685)}$$

$$\mathrm{TEV\ (equivalent/ton)} = 2 \times 1000 \times 1000/\mathrm{Mn}$$

Here, Mn represents a number average molecular weight.
Furthermore, AV (equivalents/ton) is measured by the foregoing measurement method of the concentration of terminal carboxyl group of the polyester.

(Preparation method of starting oligomer for measurement of catalytic activity ratio)

In a reactor annexed with a stirrer, a separation column and a continuous extraction unit, 100 parts by weight of bis (β-hydroxyethyl) terephthalate was charged and dissolved under a nitrogen atmosphere; a terephthalic acid/ethylene glycol (= molar ratio: 1/1.5) slurry was continuously charged at a rate of 30 parts by weight/hour while holding the temperature at 260°C and the pressure at 100 kPaG such that an average residence time was 6 hours; an esterification reaction was carried out while distilling off purified water from the separation column; and the product was continuously extracted and cooled to obtain a starting oligomer.
The oligomer which had been discharged during a period of time of from 20 hours to 25 hours after starting the charge of the slurry was cooled and then pulverized, followed by providing for an experiment for the measurement of catalytic activity ratio.
This oligomer had a rate of esterification of 91.9 %, a concentration of terminal carboxyl group of 834 equivalents/ton and a concentration of the whole of terminal groups of 1,620 equivalents/ton.

<Preparation of solution of ammonium m-tungstate in ethylene glycol>

In an Erlenmeyer flask having 29.168 g of ethylene glycol weighed therein, 0.832 g of a concentrated aqueous solution of ammonium m-tungstate (concentration of tungsten atom: 40 % by weight) was added dropwise and thoroughly mixed to prepare a solution of ammonium m-tungstate in ethylene glycol having a concentration of 1.1 % by weight as a tungsten atom.

<Preparation of titanium-silica mixed catalyst>

In a flask having 200 mL of ethylene glycol weighed therein, 2.2 g of tetraethoxysilane was added dropwise while stirring and thoroughly mixed. 0.7 g of tetra-n-butyl titanate was added dropwise to this mixed solution while stirring and again thoroughly mixed to prepare a titanium-silica mixed catalyst having a mixing ratio of titanium to silica of 16/46 (weight ratio).

<Preparation of titanium-magnesium-phosphorus synthetic catalyst>

In a one-liter Erlenmeyer flask provided with a ground-glass stopper, 60.72 g of magnesium acetate tetrahydrate was charged, to which was then added 360 g of absolute ethanol, and the mixture was stirred for 30 minutes. Thereafter, 96.26 g of tetra-n-butyl titanate was added and stirred for 20 minutes to obtain a uniform solution. Next, monoethyl acid phosphate (JAMP-2, manufactured by Johoku Chemical Co., Ltd. and having a purity of 72.6 % by weight and containing 14.5 % by weight of diethyl acid phosphate and 13.0 % by weight of orthophosphoric acid) was added over 30 minutes to obtain a slightly cloudy solution. This solution was transferred into a one-liter eggplant type flask, and the ethanol was distilled off in vacuo at an oil bath temperature of 80°C such that the contents became 322.2 g. Next, 389.25 g of ethylene glycol was added under an atmospheric pressure of nitrogen and mixed for 15 minutes to prepare a uniform solution. Next, this solution was treated under a reduced pressure of 1.33 kPa (10 Torr) for 40 minutes, thereby removing low-boiling substances. There was thus obtained 508.0 g of a pale yellow solution of a catalyst for polycondensation (titanium-magnesium-phosphorus synthetic catalyst).

This solution had a pH of 5.4 and was stable as a uniform solution. Furthermore, the concentration of titanium, magnesium and phosphorus was 2.6 ppm by weight, 1.4 ppm by weight and 0.9 ppm by weight, respectively.

(Example 1)

A polyester prepolymer was produced by using a continuous production device of polyester prepolymer provided with a slurry preparation tank having a stirrer, a conduit for charging ethylene glycol and a conduit for charging terephthalic acid; a conduit for transferring a slurry into a first esterification tank; first and second esterification reaction tanks of a complete mixing type each having a stirrer, a separation column, a starting material receiving port, a conduit for charging a catalyst and a conduit for transferring a reaction product; a conduit for transferring an esterification reaction product (oligomer) into a melt polycondensation tank (provided with a conduit for charging a catalyst, however); a melt poly-condensation tank of a complete mixing type having a stirrer, a separation column, an oligomer receiving port and a conduit for charging a catalyst; and a conduit for extracting a polyester prepolymer (provided with a conduit for charging a catalyst, however) . All the reactions were carried out under a nitrogen atmosphere.

First of all, 450 parts by weight of the starting oligomer obtained according to the foregoing preparation method of starting oligomer for measurement of catalytic activity ratio was thrown into the first esterification reaction tank and molten at a temperature of 262°C. Furthermore, ethylene glycol was charged in the slurry preparation tank such that its molar ratio to terephthalic acid became 1.5, thereby forming a slurry (slurry forming step). Subsequently, the terephthalic acid ethylene glycol (molar ratio: 1/1.5) slurry was continuously charged into the first esterification tank at a rate of 135 parts by weight/hour under a pressure of 96 KPaG such that the average residence time was 4.5 hours (slurry transfer step). At the same time, the solution of ammonium m-tungstate in ethylene glycol (concentration: 1.1 % by weight as a tungsten atom) as prepared above was continuously added as a catalyst 1 in an amount of 80 ppm by weight as tungsten with respect to the polyester obtained from a vapor phase portion of the first esterification reaction tank and subjected to an esterification reaction while distilling off formed water from the separation column (esterification step), and the product was continuously extracted and transferred into the second esterification tank. In the second esterification tank, an esterification reaction was carried out at a temperature of 260°C under a pressure of 5 kPaG for a residence time of 1.5 hours (esterification step), and the product was continuously transferred into the melt polycondensation tank through the transfer conduit (oligomer transfer step). In the transfer conduit from this second esterification reaction tank to the polycondensation tank, a solution of diantimony trioxide in ethylene glycol (concentration: 1.8 % by weight as an antimony atom concentration) was continuously added as a catalyst 2 in an amount of 209 ppm by weight as antimony with respect to the resulting polyester.

A reaction was carried out under a pressure of the poly-condensation tank of 2.5 kPaA at a temperature of 273°C for a residence time of 1.0 hour (melt polycondensation step), and the resulting polyester prepolymer was discharged through an extracting conduit (prepolymer transfer step) and cooled for solidification.

The solidified prepolymer was pulverized by a sample mill (SK-M2 Model, manufactured by Kyoritsu Riko Co., Ltd.) and sieved to obtain a prepolymer granule having an average particle size of 0.25 mm which passes through openings of 350 μm but does not pass through openings of 150 μm conforming to the JIS standards (granulation step).

18 g of this prepolymer granule was charged in an inert gas oven (IPHH-201M Model, manufactured by Tabai Especk Corp.) having an inner gas temperature of 180°C in a state that the prepolymer granule was put on a stainless steel-made vat having a rectangular shape bottom of 130 mm x 170 mm and a depth of 30 mm and subjected to a crystallization treatment at a flow rate of nitrogen to be circulated into the inert oven of 50 NL/min and at a temperature of 180°C for 2 hours. The "NL" as referred to herein means a volume (L) of a gas at 0°C and at 101.3 kPaG. 2 g of the crystallized polyester prepolymer granule was uniformly put on the foregoing stainless steel-made vat and charged in the foregoing inert oven having an inner gas temperature of 50°C A flow rate of nitrogen to be circulated into the inert oven was regulated at 50 NL/min, and the temperature was raised from 50°C to 210°C over 30 minutes. After holding at 210°C for 20 minutes, the temperature was raised to 230°C at a temperature rise rate of 0.5°C/min and held at 230°C for a prescribed period of time, thereby achieving solid phase polycondensation (solid phase polycondensation step).

The holding time after reaching 230°C was defined as a solid phase polycondensation time, and when the solid phase polycondensation time was 2 hours, an intrinsic viscosity of the resulting PET was measured.

A catalytic activity ratio of the catalysts 1 and 2 and physical properties of the resulting polyester prepolymer and the polyester after solid phase polycondensation are shown in Table 1.

(Example 2)

The same procedures as in Example 1 were followed, except that in Example 1, a solution of orthophosphoric acid in ethylene glycol (concentration: 1.6 % by weight as a phosphorus atom) was continuously added in an amount of 12 ppm by weight as phosphorus with respect to the resulting polyester from a place in an upstream side against a place at which diantimoy trioxide was added in the transfer conduit from the second esterification reaction tank into the polycondensation tank. The results obtained are shown in Table 1.

(Example 3)

The same procedures as in Example 1 were followed, except that in Example 1, the above prepared titanium-silica mixed catalyst was continuously added in an amount of 16 ppm by weight as titanium and 46 ppm by weight as silica, respectively with respect to the resulting polyester in place of the solution of diantimony trioxide in ethylene glycol. The results obtained are shown in Table 1.

(Example 4)

The same procedures as in Example 3 were followed, except that in Example 3, a solution of tetra-n-butyl titanate in ethylene glycol (concentration: 0.15 % by weight as a titanium atom) was continuously added in an amount of 4 ppm by weight as titanium against the resulting polyester in place of the solution of ammonium m-tungstate in ethylene glycol: The results obtained are shown in Table 1.

(Example 5)

The same procedures as in Example 1 were followed, except that in Example 1, the place at which the solution of di-antimony trioxide in ethylene glycol was added was changed to a vapor phase portion of the second esterification reaction tank. The results obtained are shown in Table 1.

(Example 6)

The same procedures as in Example 1 were followed, except that in Example 1, the place at which the solution of diantimony trioxide in ethylene glycol was added was changed to the conduit for extracting a prepolymer after melt polycondensation reaction. The results obtained are shown in Table 1.

(Example 7)

The same procedures as in Example 6 were followed, except that in Example 6, a solution of tetra-n-butyl titanate in ethylene glycol (concentration: 0.15 % by weight as a titanium atom) was continuously added in an amount of 8 ppm by weight as titanium with respect to the resulting polyester in place of the solution of ammonium m-tungstate in ethylene glycol; and a mixed solution of a solution of magnesium acetate tetrahydrate in ethylene glycol (concentration: 0.040 % by weight as a magnesium atom) and a solution of ethyl acid phosphate in ethylene glycol (concentration: 0.030 % by weight as a phosphorus atom) (magnesium acetate-ethyl acid phosphate mixed catalyst) was continuously added in an amount of 8 ppm by weight as magnesium and 6 ppm by weight as phosphorus, respectively with respect to the resulting polyester prepolymer in place of the solution of diantiomony trioxide in ethylene glycol. The results obtained are shown in Table 1.

(Example 8)

The same procedures as in Example 7 were followed, except that in Example 7, a mixed solution of a solution of magnesium acetate tetrahydrate in ethylene glycol (concentration: 0.030 % by weight as a magnesium atom) and a solution of dibutyl phosphate in ethylene glycol (concentration: 0.040 % by weight as a phosphorus atom) was continuously added in an amount of 4 ppm by weight as magnesium and 5 ppm by weight as phosphorus, respectively with respect to the resulting polyester prepolymer in place of the magnesium acetate-ethyl acid phosphate mixed catalyst. The results obtained are shown in Table 1.

(Example 9)

The same procedures as in Example 7 were followed, except that in Example 7, the amount of addition of the solution of tetra-n-butyl titanate in ethylene glycol to be added in the first esterification tank was changed to an amount of 4 ppm by weight as titanium with respect to the resulting polyester; and a dilute solution of the above prepared titanium-magnesium-phosphorus synthetic catalyst (concentration: 0.020 % by weight as a titanium atom) was continuously added in an amount of 4 ppm by weight as titanium, 2 ppm by weight as magnesium and 3 ppm by weight as phosphorus, respectively with respect to the resulting polyester prepolymer in place of the magnesium acetate-ethyl acid phosphate mixed catalyst. The results obtained are shown in Table 1.

(Comparative Example 1)

The same procedures as in Example 1 were followed, except that the solution of diantimony trioxide in ethylene glycol was not added. The results obtained are shown in Table 1.
Since the catalyst component corresponding to the catalyst 2 is not added, results in which the solid phase polycondensation reaction is slow were obtained.

(Comparative Example 2)

The same procedures as in Example 2 were followed, except that the solution of ammonium m-tungstate in ethylene glycol was not added. The results obtained are shown in Table 1.
Since the catalyst component corresponding to the catalyst 1 is not added, results in which the AV of the prepolymer is high and the solid phase polycondensation reaction rate is low were obtained.

(Comparative Example 3)

The same procedures as in Example 1 were followed, except that in Example 1, the place of addition of the solution of ammonium m-tungstate in ethylene glycol was changed to the place of addition of the solution of diantimony trioxide in ethylene glycol of Example 1 and the place of addition of the solution of diantimony trioxide in ethylene glycol was changed to the place of addition of the solution of ammonium m-tungstate in ethylene glycol of Example 1. The results obtained are shown in Table 1.
In this Example in which though the two kinds of catalysts were used, the addition order is different from that in the invention of this application and the magnitude in activity of the catalyst 1 and the catalyst 2 is reversed, results in which the solid phase polycondensation reaction rate is low were obtained.

(Comparative Example 4)

The same procedures as in Example 1 were followed, except that in Example 1, the solution of diantimony trioxide in ethylene glycol was changed to a solution of tetra-n-butyl titanate in ethylene glycol. In this Example in which the catalytic activity ratio of the catalyst component corresponding to the catalyst 2 is high, results in which the solid phase polycondensation reaction rate is low were obtained.

[Table 1]

| | Catalyst 1 | | | | Catalyst 2 | | | |
|---|---|---|---|---|---|---|---|---|
| | Compound | Catalytic activity ratio (K1) | Amount of addition (ppm by weight) | Position of addition | Compound | Catalytic activity ratio (K2) | Amount of addition (ppm by weight) | Position of addition |
| Example 1 | W | 0.69 | 80 | First Es | Sb | 0.48 | 209 | MSP transfer pipe |
| Example 2 | W | 0.69 | 80 | First Es | Orthophosphoric acid | - | 12 | MSP transfer pipe |
| | | | | | Sb | 0.48 | 209 | MSP transfer pipe |
| Example 3 | W | 0.69 | 80 | First Es | Ti/Si | 0.51 | Ti/Si = 16/46 | MSP transfer pipe |
| Example 4 | Ti | 0.64 | 4 | First Es | Ti/Si | 0.51 | Ti/Si = 16/46 | MSP transfer pipe |
| Example 5 | W | 0.69 | 80 | First Es | Sb | 0.48 | 209 | Second Es |
| Example 6 | W | 0.69 | 80 | First Es | Sb | 0.48 | 209 | PP transfer pipe |
| Example 7 | Ti | 0.64 | 8 | First Es | Mg/EAP | 0.46 | Mg/P = 8/6 | PP transfer pipe |
| Example 8 | Ti | 0.64 | 8 | First Es | Mg/DBP | 0.46 | Mg/P = 4/5 | PP transfer pipe |
| Example 9 | Ti | 0.64 | 4 | First Es | Ti/Mg/P | 0.50 | Ti/Mg/P =4/2/3 | PP transfer pipe |
| Comparative Example 1 | W | 0.69 | 80 | First Es | - | - | - | - |
| Comparative Example 2 | - | - | - | - | Orthophosphoric acid | - | 12 | MSP transfer pipe |
| | | | | | Sb | 0.48 | 209 | MSP transfer pipe |
| Comparative Example 3 | Sb | 0.48 | 250 | First Es | W | 0.69 | 80 | MSP transfer pipe |
| Comparative Example 4 | W | 0.69 | 80 | First Es | Ti | 0.64 | 4 | MSP transfer pipe |

[Table 1 (Cont'd.)]

| | Material quality of prepolymer | | | IV after solid phase polycondensation (dL/g) |
|---|---|---|---|---|
| | IV (dL/g) | AV (equivalents/ton) | Particle size (mm) | 2 hours |
| Example 1 | 0.20 | 24 | 0.25 | 0.81 |
| Example 2 | 0.21 | 16 | 0.25 | 0.85 |
| Example 3 | 0.21 | 6 | 0.25 | 0.77 |
| Example 4 | 0.21 | 23 | 0.25 | 0.75 |
| Example 5 | 0.21 | 28 | 0.25 | 0.77 |
| Example 6 | 0.20 | 20 | 0.25 | 0.79 |
| Example 7 | 0.20 | 25 | 0.25 | 0.79 |
| Example 8 | 0.20 | 23 | 0.25 | 0.80 |
| Example 9 | 0.22 | 19 | 0.25 | 0.78 |
| Comparative Example 1 | 0.22 | 46 | 0.25 | 0.54 |
| Comparative Example 2 | 0.21 | 143 | 0.25 | 0.46 |
| Comparative Example 3 | 0.20 | 30 | 0.25 | 0.72 |
| Comparative Example 4 | 0.22 | 47 | 0.25 | 0.58 |

EP 1 854 820 B1

16

* Catalyst:

    W: Ammonium m-tungstate

    Ti: Tetrabutyl titanate

    Sb: Diantimony trioxide

    Ti/Si: Titanium-silica mixed catalyst

    Mg/EAP: Magnesium acetate-ethyl acid phosphate mixed catalyst

    Mg/DBP: Magnesium acetate-dibutyl phosphate mixed catalyst

    Ti/Mg/P: Titanium-magnesium-phosphorus synthetic catalyst

* Position of addition:

    First Es: First esterification tank

    Second Es: Second esterification tank

    MSP transfer pipe: Conduit for transfer from second esterification tank into melt polycondensation tank

    PP transfer piper: Conduit for extracting prepolymer after melt polycondensation reaction.

While the invention has been described in detail and with reference to specific embodiments thereof, it will be apparent to one skilled in the art that various changes and modifications can be made therein without departing from the spirit and scope thereof.

This application is based on a Japanese patent application filed February 25, 2005 (Patent Application No. 2005-051460), the contents thereof being hereby incorporated by reference.

Industrial Applicability

According to the invention, it is possible to produce a polyester with high molecular weight and high quality and having practicality as a packaging material such as bottles and films for a relatively short period of time of solid phase polycondensation without using a complicated melt poly-condensation reaction device and to contribute to an improvement of the productivity of polyester.

**Claims**

1. A continuous production process for continuously producing a polyester including (a) an esterification step for obtaining an oligomer by an esterification reaction of a dicarboxylic acid component containing terephthalic acid as the major component and a diol component containing ethylene glycol as the major component, (b) a melt polycondensation step for obtaining a polyester prepolymer by a melt polycondensation reaction of the obtained oligomer, (c) a granulation step for obtaining a polyester prepolymer granule by granulation of the obtained polyester prepolymer, and (d) a solid phase polycondensation step for obtaining a polyester by a solid phase polycondensation reaction of the obtained polyester prepolymer granule, which is **characterized in that** at least two kinds of a catalyst 1 and a catalyst 2 which satisfy the following requirements (1) to (3) are successively added as catalysts in two arbitrary different places prior to the granulation step (c); that an intrinsic viscosity of the polyester prepolymer obtained in the step (b) is 0.18 dL/g or more and not more than 0.33 dL/g; that an intrinsic viscosity of the polyester prepolymer granule obtained in the step (c) is 0.18 dL/g or more and not more than 0.35 dL/g; and that an intrinsic viscosity of the polyester obtained in the solid phase polycondensation step (d) is 0.70 dL/g or more:

   (1) an activity ratio (K1) of the catalyst 1 is 0.5 or more,
   (2) an activity ratio (K2) of the catalyst 2 is less than 0.6, and
   (3) K1 > K2
   wherein the catalytic activity ratio is an index of a ratio of esterification reaction catalytic activity to the total sum of esterification reaction catalytic activity and ester exchange reaction catalytic activity of the catalyst and is defined according to a method described in the description.

2. The continuous production process of polyester according to claim 1, which is **characterized in that** the polyester prepolymer granule obtained in the granulation step (c) has a concentration of terminal carboxyl group of not more than 30 equivalents/ton and an average particle size of 0.1 mm or more and not more than 2.0 mm.

3. The continuous production process of polyester according to claim 1 or 2, wherein the catalyst 1 is at least one compound selected from the group consisting of tungsten compounds and titanium compounds.

4. The continuous production process of polyester according to claim 3, wherein the tungsten compound is at least one compound selected from the group consisting of p-tungstic acid, m-tungstic acid, tungstic acid, tungstosilicic acid, tungsto-phosphoric acid, and salts thereof.

5. The continuous production process of polyester according to claim 3, wherein the titanium compound is at least one compound selected from the group consisting of tetra-n-butyl titanate and tetra-i-propyl titanate.

6. The continuous production process of polyester according to any one of claims 1 to 5, wherein the catalyst 2 is at least one compound selected from the group consisting of antimony compounds and germanium compounds.

7. The continuous production process of polyester according to any one of claims 1 to 5, which is **characterized in that** the catalyst 2 contains a titanium element and a silicon element, a titanium element and a magnesium element, or a magnesium element and a phosphorus element.

8. The continuous production process of polyester according to any one of claims 1 to 7, which is **characterized in that** a place of addition of the catalyst 1 is the esterification step (a); and that a place of addition of the catalyst 2 is a step for transferring the oligomer obtained in the esterification step (a) into the melt polycondensation step (b) or a sequent step thereto.

**Patentansprüche**

1. Kontinuierliches Herstellungsverfahren zur kontinuierlichen Herstellung eines Polyesters mit (a) einem Veresterungsschritt zum Erhalt eines Oligomers durch eine Veresterungsreaktion einer Dicarbonsäurekomponente, die als Hauptkomponente Terephthalsäure enthält, und einer Diolkomponente, die als Hauptkomponente Ethylenglykol enthält, (b) einem Schmelzepolykondensationsschritt zum Erhalt eines Polyester-Präpolymers durch eine Schmelzepolykondensationsreaktion des erhaltenen Oligomers, (c) einem Granulationsschritt zum Erhalt eines Polyester-Präpolymer-Granulats durch Granulation des erhaltenen Polyester-Präpolymers und (d) einen Festphasenpolykondensationsschritt zum Erhalt eines Polyesters durch eine Festphasenpolykondensationsreaktion des erhaltenen Polyester-Präpolymer-Granulats, das **dadurch gekennzeichnet ist, dass** mindestens zwei Arten eines Katalysators 1 und eines Katalysators 2, die die folgenden Anforderungen (1) bis (3) erfüllen, nacheinander als Katalysatoren an zwei beliebigen verschiedenen Stellen vor dem Granulationsschritt (c) zugegeben werden; dass eine intrinsische Viskosität des in Schritt (b) erhaltenen Polyester-Präpolymers 0,18 dL/g oder mehr und höchstens 0,33 dL/g beträgt; dass eine intrinsische Viskosität des in Schritt (c) erhaltenen Polyester-Präpolymer-Granulats 0,18 dL/g oder mehr und höchstens 0,35 dL/g beträgt und dass eine intrinsische Viskosität des im Festphasenpolykondensationsschritt (d) erhaltenen Polyesters 0,70 dL/g oder mehr beträgt:

(1) ein Aktivitätsverhältnis (K1) des Katalysators 1 beträgt 0,5 oder mehr,
(2) ein Aktivitätsverhältnis (K2) des Katalysators 2 beträgt weniger als 0,6 und
(3) K1 > K2,

wobei das Verhältnis der katalytischen Aktivität ein Index eines Verhältnisses der katalytischen Aktivität bei der Veresterungsreaktion zur Gesamtsumme der katalytischen Aktivität bei der Veresterungsreaktion und der katalytischen Aktivität bei der Esteraustauschreaktion des Katalysators ist und gemäß einer in der Beschreibung beschriebenen Methode definiert ist.

2. Kontinuierliches Herstellungsverfahren für Polyester nach Anspruch 1, das **dadurch gekennzeichnet ist, dass** das in Schritt (c) erhaltene Polyester-Präpolymer-Granulat eine Konzentration von Carboxyl-Endgruppen von höchstens 30 Äquivalenten/Tonne und eine mittlere Teilchengröße von 0,1 mm oder mehr und höchstens 2,0 mm aufweist.

3. Kontinuierliches Herstellungsverfahren für Polyester nach Anspruch 1 oder 2, bei dem es sich bei dem Katalysator 1 um mindestens eine Verbindung aus der Gruppe bestehend aus Wolframverbindungen und Titanverbindungen handelt.

4. Kontinuierliches Herstellungsverfahren für Polyester nach Anspruch 3, bei dem es sich bei der Wolframverbindung um mindestens eine Verbindung aus der Gruppe bestehend aus p-Wolframsäure, m-Wolframsäure, Wolframsäure, Wolframatokieselsäure, Wolframatophosphorsäure und Salzen davon handelt.

5. Kontinuierliches Herstellungsverfahren für Polyester nach Anspruch 3, bei dem es sich bei der Titanverbindung um mindestens eine Verbindung aus der Gruppe bestehend aus Tetra-N-butyltitanat und Tetraisopropyltitanat handelt.

6. Kontinuierliches Herstellungsverfahren für Polyester nach einem der Ansprüche 1 bis 5, bei dem es sich bei dem Katalysator 2 um mindestens eine Verbindung aus der Gruppe bestehend aus Antimonverbindungen und Germaniumverbindungen handelt.

7. Kontinuierliches Herstellungsverfahren für Polyester nach einem der Ansprüche 1 bis 5, das **dadurch gekennzeichnet ist, dass** der Katalysator 2 ein Titanelement und ein Siliciumelement, ein Titanelement und ein Magnesiumelement oder ein Magnesiumelement und ein Phosphorelement enthält.

8. Kontinuierliches Herstellungsverfahren für Polyester nach einem der Ansprüche 1 bis 7, das **dadurch gekennzeichnet ist, dass** eine Stelle der Zugabe des Katalysators 1 der Veresterungsschritt (a) ist und dass eine Stelle der Zugabe des Katalysators 2 ein Schritt zur Überführung des im Veresterungsschritt (a) in den Schmelzepolykondensationsschritt (b) oder einen darauffolgenden Schritt ist.

## Revendications

1. Procédé de production continue pour produire en continu un polyester comprenant (a) une étape d'estérification pour obtenir un oligomère par une réaction d'estérification d'un composant acide dicarboxylique contenant de l'acide téréphtalique comme composant principal et d'un composant diol contenant de l'éthylène glycol comme composant principal, (b) une étape de polycondensation à l'état fondu pour obtenir un prépolymère de polyester par une réaction de polycondensation à l'état fondu de l'oligomère obtenu, (c) une étape de granulation pour obtenir un granulé de prépolymère de polyester par granulation du prépolymère de polyester obtenu, et (d) une étape de polycondensation en phase solide pour obtenir un polyester par une réaction de polycondensation en phase solide du granulé de prépolymère de polyester obtenu, qui est **caractérisé en ce qu'**au moins deux types de catalyseurs, un catalyseur 1 et un catalyseur 2, qui respectent les exigences (1) à (3) suivantes sont successivement ajoutés comme catalyseurs à deux moments différents arbitraires avant l'étape de granulation (c) ; **en ce que** la viscosité intrinsèque du prépolymère de polyester obtenu à l'étape (b) est supérieure ou égale à 0,18 dl/g et inférieure ou égale à 0,33 dl/g ; **en ce que** la viscosité intrinsèque du granulé de prépolymère de polyester obtenu à l'étape (c) est supérieure ou égale à 0,18 dl/g et inférieure ou égale à 0,35 dl/g ; et **en ce que** la viscosité intrinsèque du polyester obtenu à l'étape de polycondensation en phase solide (d) est supérieure ou égale à 0,70 dl/g :

(1) le rapport d'activité (K1) du catalyseur 1 est supérieur ou égal à 0,5,
(2) le rapport d'activité (K2) du catalyseur 2 est inférieur à 0,6, et
(3) K1 > K2,
le rapport d'activité catalytique étant un indice correspondant au rapport entre l'activité catalytique dans la réaction d'estérification et la somme totale de l'activité catalytique dans la réaction d'estérification et de l'activité catalytique dans la réaction d'échange d'ester du catalyseur, et étant défini selon un procédé décrit dans la description.

2. Procédé de production continue de polyester selon la revendication 1, qui est **caractérisé en ce que** le granulé de prépolymère de polyester obtenu à l'étape de granulation (c) a une concentration de groupes carboxyle terminaux inférieure ou égale à 30 équivalents/tonne et une taille moyenne de particules supérieure ou égale à 0,1 mm et inférieure ou égale à 2,0 mm.

3. Procédé de production continue de polyester selon la revendication 1 ou 2, dans lequel le catalyseur 1 est au moins un composé choisi dans le groupe constitué par les composés de tungstène et les composés de titane.

4. Procédé de production continue de polyester selon la revendication 3, dans lequel le composé de tungstène est au moins un composé choisi dans le groupe constitué par l'acide p-tungstique, l'acide m-tungstique, l'acide tungstique, l'acide tungstosilicique, l'acide tungsto-phosphorique, et les sels de ceux-ci.

5. Procédé de production continue de polyester selon la revendication 3, dans lequel le composé de titane est au moins un composé choisi dans le groupe constitué par le titanate de tétra-n-butyle et le titanate de tétra-i-propyle.

6. Procédé de production continue de polyester selon l'une quelconque des revendications 1 à 5, dans lequel le catalyseur 2 est au moins un composé choisi dans le groupe constitué par les composés d'antimoine et les composés de germanium.

7. Procédé de production continue de polyester selon l'une quelconque des revendications 1 à 5, qui est **caractérisé en ce que** le catalyseur 2 contient un élément de titane et un élément de silicium, un élément de titane et un élément de magnésium, ou un élément de magnésium et un élément de phosphore.

8. Procédé de production continue de polyester selon l'une quelconque des revendications 1 à 7, qui est **caractérisé en ce que** le moment d'addition du catalyseur 1 est l'étape d'estérification (a) ; et **en ce que** le moment d'addition du catalyseur 2 est une étape de transfert de l'oligomère obtenu à l'étape d'estérification (a) dans l'étape de poly-condensation à l'état fondu (b) ou une étape ultérieure à celle-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10512608 T
- JP 55133421 A
- JP 4419554 B
- JP 2005051460 A